# EUROPEAN PATENT SPECIFICATION

(11) **EP 4 623 356 B1**
(45) Date of publication and mention of the grant of the patent: **14.10.2026**
(21) Application number: 23808804.1
(22) Date of filing: 17.11.2023
(51) Int. Cl.: G06F 3/04883, G06F 40/109, G06F 40/171

(54) **SETTING FONT SIZE IN AN UNCONSTRAINED CANVAS**
EINSTELLUNG DER SCHRIFTGRÖSSE IN EINER UNEINGESCHRÄNKTEN LEINWAND
DÉFINITION DE TAILLE DE POLICE DE CARACTÈRES DANS UNE TOILE NON CONTRAINTE

(30) Priority: 25.11.2022 EP 22306744
(43) Date of publication of application: 01.10.2025
(73) Proprietor: MyScript, 44339 Nantes Cedex 3 (FR)
(72) Inventor: BONNET, Clément, 44339 Nantes Cedex 3 (FR); MÉLINAND, Robin, 44339 Nantes Cedex 3 (FR)
(74) Representative: RVDB Nantes
(86) International application number: PCT/EP2023/082304
(87) International publication number: WO 2024/110354

(56) References cited:
- US-A1- 2005 135 678
- US-A1- 2016 078 847
- US-A1- 2018 114 059

## Description

### Field of the invention

The present description relates generally to the field of computing device interfaces capable of recognizing user handwriting input text. In particular, the present description relates to the management of typesetting of digital ink corresponding to handwritten input.

### Background

Computing devices continue to become more ubiquitous to daily life. They take the form of computer desktops, laptop computers, tablet computers, hybrid computers (2-in-1 s), e- book readers, mobile phones, smartphones, wearable computers, global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally consist of at least one processing element, such as a central processing unit (CPU), some form of memory, and input and output devices. The variety of computing devices and their subsequent uses necessitate a variety of interfaces and input devices. One such input device is a touch sensitive surface such as a touch screen or touch pad wherein user input is received through contact between the user's finger or an instrument such as a pen or stylus and the touch sensitive surface. Another input device is an input interface that senses gestures made by a user above the input interface. A further input device is a position detection system which detects the relative position of either touch or non-touch interactions with a non-touch physical or virtual surface. Any of these methods of input can be used generally for drawing or inputting text. The user's handwriting is interpreted using a handwriting recognition system or method.

One application of handwriting recognition in non-portable computing devices, such as in-vehicle control and entertainment systems, and in portable computing devices, such as smartphones, phablets and tablets, is for the input of text into various applications run by the computing devices in a manner similar to that traditionally done with keyboard, either physical or virtual, and voice. However, unlike keyboard input which is governed by strict layout rules, such as text entry on visible or invisible lines in accordance with the position of a displayed cursor, handwriting can be input virtually anywhere on the input interface of the device. Further, unlike voice input for text input, which generally involves speech-to-text conversion, handwriting for text input typically involves conversion of so-called 'digital ink', being the rendered display of the users handwriting or 'raw ink', into typed or 'typeset ink' with associated typesetted structure.

The substantially unconstrained input of handwriting has some effect on the users' ability to interact with the input once it has been rendered as digital ink. This is because, unlike typeset ink text which has characters relatively located in a uniform and known manner, the characters of the digital ink text are not uniform or in relatively known positions, generally due to the irregularity inherent in handwriting. Accordingly, conventional systems and methods typically only allow further interaction to be made on the typeset ink rendered from the recognized text. The conversion to the typeset ink also has problems with respect to interpretation of the relatively free positioning of the digital ink.

Available handwritten note taking applications generally provide users with the ability to typeset the handwritten input either manually or automatically (e.g., on-the-fly). However, as typeset text is generally smaller and more uniform than handwritten text (described in detail later), the user's layout of the handwritten input, such as in sentences in paragraphs, may not translate well to typeset text, e.g., the sentences become too short such that the paragraphs lose visual meaning, particularly when it was entered on an unconstrained canvas.

Additionally, keyboard input may be entered in accordance with the position of a displayed cursor within recognized handwriting input although typeset input may not be scaled with the displayed handwriting input.

This can be overcome by reflowing the typeset text so that the layout appears to be preserved, e.g., paragraphs are retained. However, the user's original handwritten layout may be meaningful and the eventual typesetting of the handwritten text do not take into account the spacing and distribution of the lines. The typeset ink setting such as the font size and the line spacing chosen by default may not be representative typesetting of the handwritten note content and layout.

The document US 2016/078847 A1 discloses a method for reflecting handwriting attributes in typographic characters. The method comprises parsing calligraphic data from digitized handwriting. The calligraphic data includes a character stroke slant and a character pixel matrix. The digitized handwriting is rendered with a render font selected in response to one or more of the character stroke slant and the character pixel matrix.

The document D2 US 2018/114059 A1 discloses a system for managing typesetting of digital ink structured content. The system determines dimensional information of digital ink text elements of the structured content. It then calculates a first font size for each typeset ink text element, categorizes the typeset ink text elements into one or more categories of the structured content, and determines a second font size for each typeset ink text element based on the first font size of the respective category. The system displays the typeset ink text elements at their respective determined second font sizes.

### Summary of the Invention

In the present system and method, the typeset text size is set so that it provides representative display of the typeset ink.

The examples of the present invention that are described herein below provide a computing device and method for processing text in a digital document, and in particular for setting a font size of typeset characters, said font size matching a size of handwritten characters input on an unconstrained canvas of a computing device.

According to a particular aspect, the invention provides a method implemented by a computing device for font size setting, said method comprising: receiving, on the unconstrained canvas of an input area, handwriting input text; causing display of, on a display area, the handwriting input text; detecting, on the input area of the computing device, a typesetting input mode action; recognizing, in response to the typesetting input mode action detection, the handwriting input text as multiple words defining at least one text block; defining a threshold or a range of a number of character;
calculating a word base height for each recognized word of a text block; wherein the word base height is calculated as: (i) an average, referred as average base width, of a base width of each character of the recognized word, if a number of characters of the recognized word is above the threshold or the highest number of the range; (ii) an average, referred as average base height, of a base height of each character of the recognized word, if the number of characters of the recognized word is below the threshold or the lowest number of the range, wherein a base height of each character is a function of a character height of the respective character; (iii) an average of the average base width and the average base height of the recognized word, if the number of characters of the recognized word is equal to the threshold or within the range; and setting a font size of the text block, wherein the font size is an average of the word base heights of the words of the text block.

According to a particular embodiment, the detecting of the typesetting input mode action comprises selecting a cursor input mode; wherein the method further comprises causing display of new typeset characters within the text block at a detected cursor position according to the calculated font size.

According to a particular embodiment, the detecting of the typesetting input mode action comprises detecting a user interaction for converting the handwriting input into typeset; wherein the method further comprises converting the handwriting input text into typeset ink; and displaying the input text as typeset characters according to the calculated font size within the text block.

According to a particular embodiment, the calculating of the word base height of each recognized word comprises: determining a number of characters of each recognized word; (i) if the number of characters of a recognized word is above the threshold or the highest number of the range, the calculating of the word base height of each recognized word further comprises: determining a width of a bounding box of the recognized word; wherein the word base height of the recognized word is calculated as a base width of the bounding box divided by the number of characters of the recognized word; (ii) if the number of characters of the recognized word is below the threshold or the lowest number of the range, the calculating of the word base height of each recognized word further comprises: determining a heigh of a bounding box of each character of the recognized word, wherein the word base height is calculated as an average base height per character of the recognized word, wherein a base height of a character is a function of a character height of the character; (iii) if the number of characters of the recognized word is equal to the threshold or within the range, the calculating of the word base height of each recognized word further comprises: determining the base width of the bounding box of the recognized word by dividing the width of the bounding box of the recognized word by the number of characters of the recognized word ; and determining the average base height per character of the recognized word; wherein the word base height is calculated as an average of the average base width of the bounding box and the average base height.

According to a particular embodiment, the threshold is two characters.

According to a particular embodiment, the setting of the font size further comprises: calculating a font size equal to the average of the respective word base heights of the words of the text block; comparing the calculated font size to a set of predefined font sizes of the unconstrained canvas; and selecting a predefined font size which is the closest to the calculated font size.

According to a particular embodiment, the method, further comprising setting a text block interline factor by: calculating an average interline equal to an average interline distances of the text block; calculating a factor by dividing the calculated average interline by the calculated font size; and selecting, as the set text block interline factor, a predefined interline factor which is the closest to the calculated factor.

According to another aspect, the present invention relates to a computing device for setting a font size of typeset characters, said font size matching a size of handwritten characters input on an unconstrained canvas of the computing device, comprising:
- an input area configured to receive a handwriting input text; a display area configured to cause display of the handwriting input text;
- a typeset detection module configured to detect a typesetting input mode action on the input area of the computing device;
- a recognition module configured to recognize, in response to the typesetting input mode action detection, the handwriting input text as multiple words defining at least one text block;
- a base height calculation module configured to calculate a word base height for each recognized word of a text block;
- a font size calculation module configured to calculate a font size of the text block, wherein the font size is an average of the word base heights of the words of the text block.

According to other embodiments, the computing device comprises:
- an interline determination module is configured to determine a text block interline factor according to an average interline distance of the text block;
- a typeset input module is configured to cause display of new typeset characters within the text block at a detected cursor position according to the calculated font size;
- a converter is configured to convert the handwriting input into typeset; and to cause display on the display are of the input text as typeset characters according to the calculated font size within the text block;
- a base height ratio database for compiling base height ratios for calculating a base height of a character which is a function of a character height of the character according to a base height ratio;

### Brief Description of the Drawings

The present system and method will be more fully understood from the following detailed description of the examples thereof, taken together with the drawings. In the drawings like reference numerals depict like elements. In the drawings:
FIG. 1 shows a block diagram of a computing device in accordance with an embodiment of the present invention;
FIG. 2A shows typography information including typical features of handwritten digital ink;
FIG. 2B shows typography information including typical features of typeset ink;
FIG. 3A shows example handwritten input text to an input area and rendered as digital ink on a computing device of the present invention;
FIG. 3B shows the content of FIG. 3A with an example of an average base width determination for a recognized word over the two- character threshold, according to a particular embodiment of the present invention;
FIG. 3C shows the content of FIG. 3A with another example of an average base width determination for a recognized word over the two-character threshold, according to a particular embodiment of the present invention;
FIG. 3D shows the content of FIG. 3A with another example of an average base width determination, for a recognized word over the two-character threshold according to a particular embodiment of the present invention;
FIG. 3E shows the content of FIG. 3A with an example of an average base height determination for a recognized word below the two-character threshold, according to a particular embodiment of the present invention;
FIG. 3F shows the content of FIG. 3A with an example of an average base width determination for a recognized word equals to the two-character threshold, according to a particular embodiment of the present invention;
FIG. 3G shows the content of FIG. 3A with an example of an average base height determination for a recognized word equals to the two-character threshold, according to a particular embodiment of the present invention;
FIG. 4A shows an example typeset ink resulting from converting the handwriting input text of FIG. 3A according to the calculated font size according to a particular embodiment of the present invention;
FIG. 4B shows the content of FIG. 3A with an example typeset characters input at a detected cursor position according to the calculated font size according to a particular embodiment of the present invention;
FIG. 5 shows a flow diagram of an example of the present method for setting a font size of typeset characters, said font size matching a size of handwritten characters input on an unconstrained canvas of a computing device.

### Detailed Description of Example Embodiments

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference to and discussion of directional features such as up, down, above, below, lowest, highest, horizontal, vertical, etc., are made with respect to the Cartesian coordinate system as applied to the input interface on which the input to be recognized is made. Further, the use of the term 'text' in the present description is understood as encompassing all alphanumeric characters, and strings thereof, in any written language and common place non-alphanumeric characters, e.g., symbols, used in written text. Furthermore, the term 'non-text' in the present description is understood as encompassing freeform handwritten content and rendered text and image data, as well as non-alphanumeric characters, and strings thereof, and alphanumeric characters, and strings thereof, which are used in non-text contexts.

The various technologies described herein generally relate to capture, processing and management of handwritten content on portable and non-portable computing devices in a manner which allows conversion of that content into publishable documents. The systems and methods described herein may utilize recognition of users' natural writing or drawing styles input to a computing device via an input area, such as a touch sensitive screen, connected to, or of, the computing device or via an input device, such as a digital pen or mouse, connected to the computing device. Whilst the various examples are described with respect to recognition of handwriting input using so-called online recognition techniques, it is understood that application is possible to other forms of input for recognition, such as offline recognition in which images rather than digital ink are recognized.

The terms hand-drawing and handwriting are used interchangeably herein to define the creation of digital content by users through use of their hands either directly onto a digital or digitally connected medium or via an input tool, such as a hand-held stylus. The term "hand" is used herein to provide concise description of the input techniques, however the use of other parts of a users' body for similar input is included in this definition, such as foot, mouth and eye.

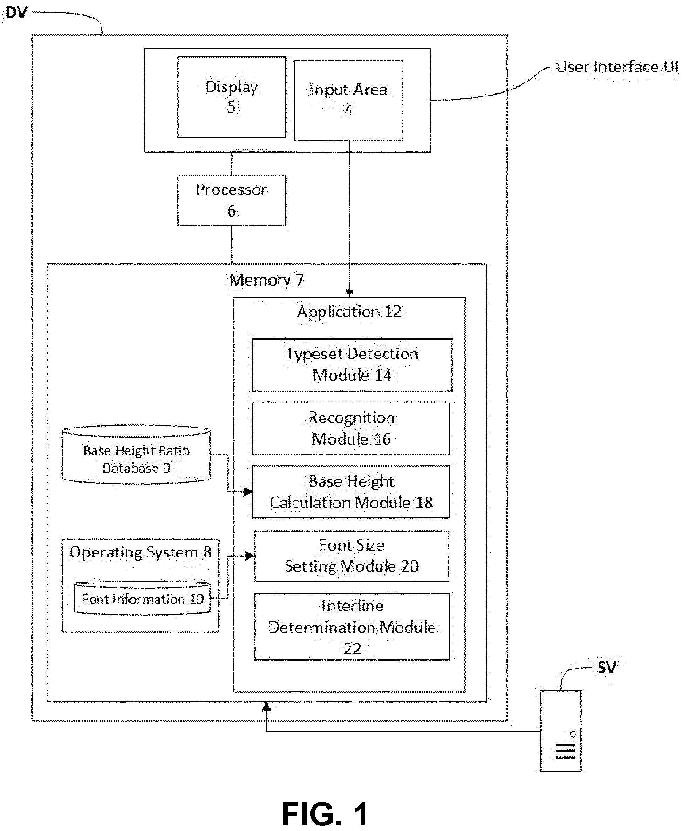

FIG. 1 illustrates a block diagram of a system, comprising a computing device DV, for defining a font size of typeset characters, said font size matching a size of handwritten characters input on an unconstrained canvas of the computing device.

The computing device DV may be a computer desktop, laptop computer, tablet computer, hybrid computers (2-in- 1 s), e-book reader, mobile phone, smartphone, wearable computer, digital watch, interactive whiteboard, global positioning system (GPS) unit, enterprise digital assistant (EDA), personal digital assistant (PDA), game console, or the like. The computing device DV includes components of at least one processing element, some form of memory and input and/or output (I/O) devices. The components communicate with each other through inputs and outputs, such as connectors, lines, buses, cables, buffers, electromagnetic links, networks, modems, transducers, IR ports, antennas, or others known to those of ordinary skill in the art.

The illustrated example of the computing device DV has at least one display 5 for outputting data from the computing device such as images, text, and video. The display 5 may use LCD, plasma, LED, OLED, CRT, or any other appropriate technology that is or is not touch sensitive as known to those of ordinary skill in the art. At least some of the display 5 is co-located with at least one input area 4. The input area 4 may employ technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input area 4 may be bounded by a permanent or video-generated border that clearly identifies its boundaries. Instead of, or additional to, an on-board display, the computing device DV may have a projected display capability.

The computing device DV also includes a processor 6, which is a hardware device for executing software, particularly software stored in memory 7. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 7 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 7 may incorporate electronic, magnetic, optical, and/or other types of storage media. The memory 7 can have a distributed architecture where various components are situated remote from one another but can also be accessed by the processor 6. Further, the memory 7 may be remote from the device, such as at a server or cloud-based system, which is remotely accessible by the computing device DV. The memory 7 is coupled to the processor 6, so the processor 6 can read information from and write information to the memory 7. In the alternative, the memory 7 may be integral to the processor 6. In another example, the processor 6 and the memory 7 may both reside in a single ASIC or other integrated circuit.

The software in the memory 7 includes an operating system 8 and an application 12 in the form of a non- transitory computer readable medium having a computer readable program code embodied therein. The operating system 8 controls the execution of the application 12. The operating system 8 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the application 12 of the present system and method may be provided without use of an operating system.

The application 12 includes one or more processing elements related to detection, management and treatment of user input (discussed in detail later). The software may also include one or more other applications related to handwriting recognition, different functions, or both. Some examples of other applications include a text editor, telephone dialer, contacts directory, instant messaging facility, computer-aided design (CAD) program, email program, word processing program, web browser, and camera.

The application 12, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the HWR system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, and Ada; or (c) functional programing languages for example but no limited to Hope, Rex, Common Lisp, Scheme, Clojure, Racket, Erlang, OCaml, Haskell, Prolog, and F#.

Handwriting input entered on or via the input area 4 may be processed by the processor 6 as digital ink. A user may enter a handwriting input with a finger or some instrument such as a pen or stylus suitable for use with the input interface. The user may also enter a handwriting input by making a gesture above the input interface 4 if technology that senses or images motion in the vicinity of the input interface 4 is being used, or with a peripheral device of the computing device DV, such as a mouse or joystick, or with a projected interface, e.g., image processing of a passive plane surface to determine the stroke and gesture signals.

The present system and method allow handwriting to be input virtually anywhere on the input area 4 of the computing device DV and this input is rendered as digital ink in the input position on the display area 5. The input area 4 is provided as an unconstrained canvas that allows users to create object blocks (blocks of text, drawings, etc.) anywhere without worrying about sizing or alignment. However, an alignment structure in the form of a line pattern background may be provided for guidance of user input and the alignment of digital and typeset ink objects. In any case, as users may input handwriting that is not closely aligned to the line pattern or may desire to ignore the line pattern and write in an unconstrained manner, such as diagonally or haphazardly, the recognition module 16 is able to recognize this freely positioned handwriting. This 'free' input may be rendered as digital ink at the input position.

A handwriting input is characterized by at least a stroke initiation location, a stroke termination location, and a path connecting the stroke initiation and termination locations. Further information such as timing, pressure, angle at a number of sample points along the path may also be captured to provide deeper detail of the strokes.

The present system and method further allow users to interact with the digital ink itself and provide meaningful guidance and results of that interaction. Interaction is assisted by the performance of segmentation of strokes in the recognition process and using information on this segmentation to allow management of an input or editing cursor that acts as a pointer for character level interactions and editing operations.

According to a particular embodiment, when running the applications 12 stored in the memories 7 (FIG. 1), the processors 6 implement modules, namely: a typeset detection module 14, a recognition module 16, a base height calculation module 18, a font size setting module 20 and a interline determination module 22.

The typeset detection module 14 is configured to detect, on the input area 4, a typesetting input mode action.

An input mode may be a typesetting input mode for receiving input as typeset ink using keys of the keyboard or a typing panel of the input area. On another hand, the input mode may be a handwriting input mode using a handwriting panel and/or a multi-modal panel of the input area.

The input mode selection may be detected upon reception of certain user actions, such as launching an application on the computing device DV or interacting with components of that application such as a menu, for example, for the input of content. According to a particular embodiment, the typesetting input mode action may comprise selecting a cursor input mode. Further, the method may comprise causing display of new typeset characters within a text block at a detected cursor position according to a defined font size.

According to another embodiment, the typesetting input mode action may comprise detecting a user interaction for converting the handwriting input text into typeset ink. Further the method may comprise conversion of the handwriting input into typeset; and displaying the input text as typeset characters according to a calculated font size within the text block, as described below.

The recognition module 16 interprets the handwritten input. Conventional handwriting recognition processes use such recognition in order to provide typesetted or fontified conversion of handwriting input or to interact or edit the handwriting input. The typesetting input mode action may involve the user performing a single-point or multipoint gesture, e.g., by a tap or double tap, somewhere on the user area 4 or through selection of menu or the like of the UI. The application 12 and/or the recognition module 16, is configured to recognize such a typeset command and to cause conversion of the digital ink into corresponding typeset ink. For example, this may be achieved as described in U.S. patent application Ser. No. 14/955,155.

Because different users may naturally write the same object, e.g., a letter, a shape, a symbol, with slight variations, a recognition module 16 accommodates a variety of ways in which each object may be entered whilst being recognized as the correct or intended object.

The recognition module 16 may implement a method or system for communication with a handwriting or mixed input recognition system remote from the device, such as server or cloud-based system, but which is remotely accessible by the computing device DV through communications links using the afore-mentioned communications I/O devices of the computing device DV. Further, the recognition module 16 may operate together with the application 12 or be combined as a single application.

The recognition module 16 includes stages such as preprocessing, recognition and output. The preprocessing stage processes the digital ink to achieve greater accuracy and reducing processing time during the recognition stage. This preprocessing may include normalizing of the path connecting the stroke initiation and termination locations by applying size normalization and/or methods such as B-spline approximation to smooth the input. The preprocessed strokes are then passed to the recognition stage which processes the strokes to recognize the objects formed thereby. The recognized ink objects are then output to the application 12 for further processing and/or display.

The recognition stage may include different processing units or experts. In a particular example, three experts, a segmentation expert, a recognition expert, and a language expert, collaborate through dynamic programming to generate the output.

The segmentation expert defines the different ways to segment the input strokes into individual element hypotheses, e.g., alphanumeric characters and mathematical operators, text characters, individual shapes, or sub expression, in order to form expressions, e.g., words, mathematical equations, or groups of shapes. For example, the segmentation expert may form the element hypotheses by grouping consecutive strokes of the original input to obtain a segmentation graph where each node corresponds to at least one element hypothesis and where adjacency constraints between elements are handled by the node connections. Alternatively, the segmentation expert may employ separate experts for different input types, such as text, drawings, equations, and music notation. Nodes of the graph are considered adjacent if the corresponding hypotheses have no common stroke but whose strokes are consecutive in the original input.

The segmentation expert is not limited to handwriting input where each individual character is separated from its neighbor characters with a pen-up, but is also able to process cursive writing where attached characters are written one over the other. When interpreting cursive user input, the segmentation expert segments each stroke based on a detection of particular points defining locations for breaking a stroke into its constituting segments. The particular points for breaking a stroke into its constituting segments may be defined by crossing points, a change in the slope of stroke path, etc. These constituting segments are used to construct the segmentation graph. The segmentation expert may thus be configured to operate as described in United States Patent Publication No. 2015/0286886. Alternatively, with respect to cursive input, the recognition module 16 may further be configured to operate as described in United States Patent Publication No. 2015/0356360.

The recognition expert provides classification of the features extracted by a classifier and outputs a list of element candidates with probabilities or recognition scores for each node of the segmentation graph. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task.

The language expert generates linguistic meaning for the different paths in the segmentation graph using language models (e.g., grammar or semantics). The language expert checks the candidates suggested by the other experts according to linguistic information. The linguistic information can include a lexicon, regular expressions, etc. and is the storage for all static data used by the language expert to execute a language model. A language model can rely on statistical information on a given language. The linguistic information is computed off-line, with or without adaption according to the results of recognition and user interactions, and provided to the language expert.

The language expert aims at finding the best recognition path. In one example, the language expert does this by exploring a language model such as final state automaton (FSA) representing the content of linguistic information. In addition to the lexicon constraint, the language expert may use a language model with statistical information modeling for how frequent a given sequence of elements appears in the specified language or is used by a specific user to evaluate the linguistic likelihood of the interpretation of a given path of the segmentation graph.

As described earlier, the application 12 may cause the recognition module 16 to recognize the handwritten through the recognition processing described earlier. The application 12 identifies a plurality of graphical objects in digital ink, such as at least one text section or text block containing at least one text object such as words, formed thereby.

According to a particular embodiment, the base height calculation module 18 is configured to calculate a word base height WBH of a handwritten word of the text block.

In one example, the word base height WBH is calculated as an average base width of characters of the handwritten word.

In another example, the word base height is calculated as an average base height of the characters of the handwritten word, wherein a base height of a character is a function of a character height. The base height of a character is calculated according to a base height ratio retrieved from a base height ratio database 9 stored in the memory 7.

The base height ratio is defined according to typical geometrical features of letters and characters defined as typography information.

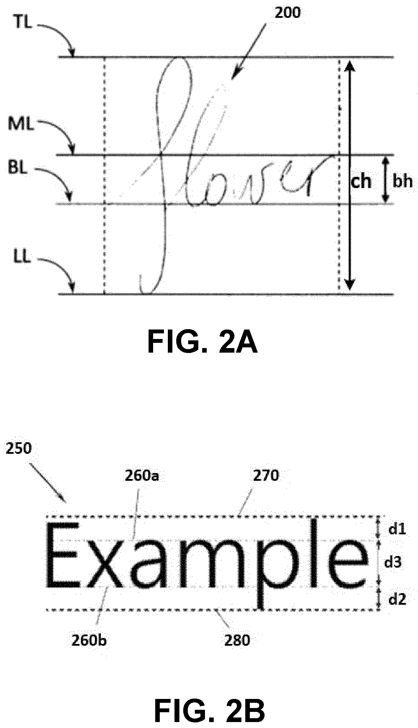

As shown on FIG. 2A for an example handwriting input text 200 representing the word "flower", typography information includes several features related to elements of text, including ascenders and descenders of letters. With respect to handwritten characters the recognition module 16 may determine lower and upper extrema of each character. A lower extremum is the lowest point at which the stroke or strokes of a recognized character pass. A lower-line LL is defined as the horizontal line passing through a point related to the lower extremum across the horizontal extent of the character. An upper extremum is the highest point at which the stroke or strokes of a recognized character pass. A top-line TL is defined as the horizontal line passing through a point related to the upper extremum across the horizontal extent of the character. A character-height ch is defined as a distance between the lower-line and the top-line.

These features are shown as an example on FIG. 2A for a first character 'f' of the word 200.

Other elements of text that may be considered by the present system and method in determining the typograph may include, for example, character width, spacing, slant.

Besides shapes, lines and widths, it is mainly a base height bh that is decisive for the optical size. Depending on the characters, the base height bh may have different relation to the character-height.

For letters having neither descenders nor ascenders and in lower case form, a mid-line ML is defined as the top-line and a base-line BL is defined as the lower-line (FIG. 2A). The base-height bh is defined as a distance between the base-line BL and the mid-line ML.

For letters having descenders and certain punctuation marks, the mid-line ML may be defined as the top-line TL and the base-line BL may be defined as the horizontal line passing through a point of the letter which is the median distance between the point of the letter passing through the top-line and a point of the letter passing through the lower-line, or which is defined by some other metric (such as certain geometrical features of the stoke(s) itself), between the mid- and lower-lines.

For capitalized letters, letters having ascenders and certain punctuation marks, the base-line BL may be defined as the lower-line LL and the mid-line ML may be defined as the horizontal line passing through a point which is at equivalent distance between the top- and base-lines TL and BL, for example.

Certain characters, depending on language and handwriting styles, may include both ascenders and descenders, or diacritics (such as accents), such that certain combinations or weightings of the above-described relationships are used to define the typography of the characters.

The base height ratio between the base-height and the character-height has been calculated for handwritten text samples. The average base height ratio for each type of character of the latin-alphabet has been registered in the base-height ratio dataset 9 and stored in the memory 7.

And in another example, the word base height is calculated as an average of: (i) the average base width and (ii) the average base height of the characters of the word.

According to a particular embodiment, the base height calculation module 18 is configured to calculate a text block base height TBH wherein the text block base height TBH is calculated as an average of the word base heights of the words contained in the text block.

According to a particular embodiment, the font size calculation module is configured to calculate a text block font size TFS based on the text block base height and on a font size ratio retrieved from the font module 10 of the operating system 8.

Similarly to the geometrical feature of the handwritten characters, typical geometrical features of typeset characters of a typeset word, as a word "Example" shown on FIG. 2B, specifies an upper extent (illustrated as dashed line 270) defined by the ascenders of the text characters, e.g., the character "I", and a lower extent (illustrated as dashed line 280) defined by the descenders of the text characters, e.g., the character "p". These extents are spaced from respective upper and lower nominal extents (illustrated as dashed lines 260a and 260b, respectively) which define a nominal height of the text characters without ascenders and descenders. The upper extent line 270 is spaced a distance d1 from the upper nominal extent line 260a. The lower extent line 280 is spaced a distance d2 from the lower nominal extent line 260b. The nominal extent, i.e., the distance between the upper and lower nominal extent lines 260a and 260b, is a distance d3. Accordingly, the font size or text height, D, is defined as d1 +d3+d2. A font may be described by a font size ratio between the nominal height and the text height.

Different fonts use different font size ratios. For example, fonts with a large font size ratio tend to appear larger than fonts where the font size ratio is relatively small. Font size ratios for different fonts may be stored in font information 10 of the operating system 8 (FIG. 1).

The typesetting conversion of digital ink in accordance with the present system and method may be performed so that the resultant typeset ink has dimensions which closely represent the dimensions of the digital ink.

According to a particular embodiment, the interline determination module 22 is configured to determine a text block interline factor.

Typical typographic rules define that text is best read with a interline in-between 1,3 and 1,7 times its font size. Accordingly, an interline factor may be set at about 1,3 to about 1,7 times the actual typeset text size. Setting an interline factor to be a regular number that can be multiplied easily avoids non-integer sizing, which would lead to blurred rendering. Accordingly, possible interline factors are set at, for example, 1,3, 1,5 or 1,7.

In one embodiment, the text block interline factor is set as a default interline factor, for example when the text block contains only one text line. In another embodiment, the text block interline determination module 22 determines the text block interline factor according to an average interline distance of the text block. Interline distances of the text block are measured between the base lines of two adjacent handwritten text lines. The text block interline determination module 22 computes the average interline distance according to the measured interline distances. A factor is calculated by dividing the average interline distance by the calculated font size. The text block interline factor is chosen as the closest possible interline factor to the calculated factor. The text block interline distance is calculated as the product of the calculated font size and the text block interline factor.

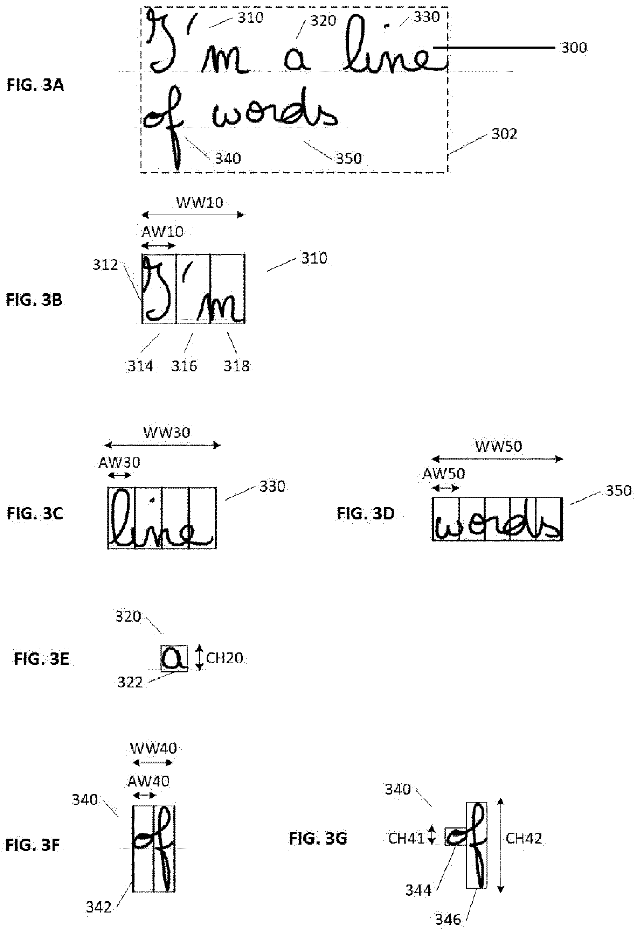

FIG. 3A shows, on the display area 5 of the computing device DV, two text lines as handwritten input 300 onto the unconstrained canvas of the input area 4 and rendered as digital ink. The digital ink includes several input strokes representing text characters of five sequences of text characters (310, 320, 330, 340, 350) which represents five words: "I'm a line of words". The handwriting input 300 is provided for illustrative purpose only, as it may vary depending on each case.

Following the detection of a typesetting input mode action, the handwritten input may be recognized as a text block of two lines and five words 310, 320, 330, 340, 350. A bounding box of the digital ink text 302, as shown on FIG. 3A, defines an area according to which a typeset version of the digital ink text 302 may be displayed. For this purpose, a font size of typeset digital ink of the text block matching the size of the handwritten input of the text block needs to be defined. Rendering and further interactions with the text block is meant to maintain visual aspect of the handwritten input 300 such as the sizing of the input.

The definition of the text block font size is based on a calculation of word base heights of the recognized words contained in the text block. The calculation of a word base height depends on the number of characters of (i.e. comprised in) a recognized word. A certain threshold defining a number of characters of a word may be set. A range of numbers of characters may be set, for example the range may be two to three characters (e.g. [2, 3] ). Depending on whether the threshold or the range of numbers of character determines which method of calculation of the word base height may be used.

For example, in Figure 3A, the first sequence of handwritten characters 310 "I'm" is considered as a first recognized word of the text block of three characters. The second sequence of handwritten characters 320 "a" is considered as a second recognized word of the text block of one character. The third sequence of characters 330 "line" is considered as a third recognized word of the text block of four characters. The fourth sequence of characters "of" is considered as a fourth recognized word of two characters. The fifth sequence of characters "words" is considered as a fifth recognized word of five characters.

In one embodiment, the threshold is set to two characters, although other threshold values are possible.

A first method of calculation of a word base height for a recognized word with a number of characters above (over) the threshold or the highest number of the range is illustrated in the figures FIG. 3B, FIG. 3C and FIG.3D according to a particular example.

If the number of characters of the recognized word is above the threshold or the highest number of the range, the word base height is based on the determination of an average base width per character of the recognized word. FIG. 3B shows the first recognized word 310 and a first bounding box 312 of the first word 310. A first width of the first bounding box, shown as a doubled arrow WW10, is 30 millimeters (further abbreviated by mm). A first average base width per character is calculated by dividing the first width WW10 by the number of characters of the first word. This first average base width represented on FIG. 3B by the doubled arrow AW10 is 10mm. Boxes 314, 316 and 318 are defined according to the first average base width AW10 and could be understood as virtual areas available per typeset character of a possible converted version of the first word. The word base height WBH10 of the first word is represented by the first average base width AW10.

Similarly, as shown on FIG. 3C and FIG. 3D, the word base heights of the third and fifth recognized words are based on the determination of third and fifth average base widths per character of the third and the fifth recognized words respectively. The third and the fifth width WW30 and WW50 are 33mm and 37mm respectively. A third and a fifth average base width are calculated by dividing the third and the fifth widths by the numbers of characters of the third and the fifth words, respectively. In this example, the third and the fifth average base widths AW30 and AW50 represented on FIG. 3C and FIG. 3D are 8,25mm and 7,4mm respectively. The word base heights WBH30 and WBH50 are represented by the third and fifth average base widths AW30 and AW50 respectively.

A second method of calculation of a word base height of a recognized word with a number of characters below the threshold or the lowest number of the range is illustrated in the FIG. 3E according to a particular example. In the second method, the word base height is based on the determination of heights of characters of the recognized word. FIG. 3E shows the second recognized word 320 and a bounding box of a character of the word 320. A first height of the character of the word 320, shown as a doubled arrow CH20, is 7,6mm. A first base height BH20 of the character of the word 320 is a function of the first character height CH20. The first base height BH20 is calculated by retrieving a first ratio from the base height ratio database 9. Ratios are compiled over handwriting text sample and stored as typographic information about each type of characters recognized by the recognition module including lower case and capitalized letters, letters having certain diacritical mark, etc. The first ratio retrieved from the database 9 corresponding to lower case a-letter is 1, therefore the first base height BH20 is equal to the character height CH20. The word base height of second word 320 is the average of the character base heights of the word, therefore, as this second word is a one-character word, the word base height of the second word is equal to the character base height.

A third method of calculation of the word base height of a recognized word with a number of characters equal to the threshold or within the range is illustrated on the FIG. 3F and FIG. 3G according to a particular example. In the third method, the word base height of the recognized word is based on a global average of an average base width per character as calculated by the first method and an average base height of the recognized word as calculated by the second method.

FIG. 3F shows the fourth recognized word 340 and a fourth bounding box 342 of the fourth word 340. A fourth width of the fourth bounding box, shown as a doubled arrow WW40, is 12 millimeters. A first average base width per character is calculated by dividing the first width WW40 by the number of characters of the fourth word. This fourth average base width represented on FIG. 3F by the doubled arrow AW40 is 6mm.

FIG. 3G shows the fourth recognized word 340 and bounding boxes 344 and 346 of characters of the word 340. A height of the first character of the word 340, shown as a doubled arrow CH41, is 5mm. A base height BH41 of the first character of the word 340 is a function of the character height CH41. The base height BH41 is calculated by retrieving a second ratio from the base height ratio database 9. The second ratio retrieved from the database 9 corresponding to lower case o-letter is 1, therefore the base height BH41 is equal to the character height CH41.

A height of the second character of the word 340, shown as a doubled arrow CH42, is 25mm. A base height BH42 of the second character of the word 340 is a function of the character height CH42. The base height BH42 is calculated by retrieving a third ratio from the base height ratio database 9. The third ratio retrieved from the database 9 corresponding to lower case f-letter is one third (1/3), therefore the average base height BH42 is 8,33mm.

The average base height of fourth word 340 is the average of the character base heights of the word, therefore the average base height of the fourth word is 6,66mm.

As for the third method, the word base height of the fourth recognized word is based on a global average of the average base width per character AW40 as calculated by the first method and the average based height of the fourth recognized word as calculated by the second method. The word base height of the fourth word is 6,33mm.

A text block base height TBH is based on an average of the word base heights of the words contained in the text block. The average of WBH10, WBH20, WBH30, WBH40 and WBH50 is 7,9mm.

A text block font size is based on the text block base height and a font size ratio calculated according to font information acquired from font module 10 of operating system 8. Font module 10 may contain font information for each font in separate font files. Different fonts are characterized by different font size ratios.

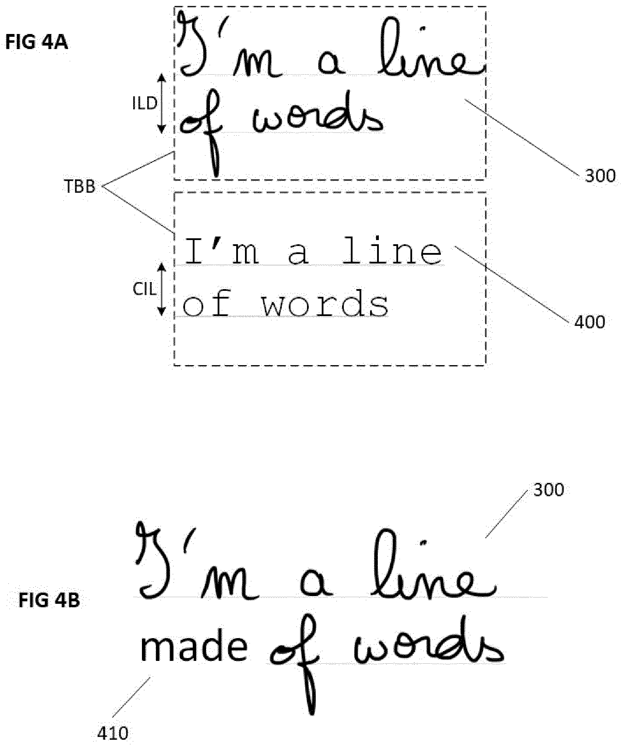

FIG. 4A shows the handwritten text 300 of FIG. 3A identified as a text block according to a particular example. The identified text block is shown with a text bounding box TBB represented as a dashed rectangle and an interline distance ILD represented as a double arrow indicating the distance between the two base lines of the text 300. Figure 4A also shows a typeset version 400 of the handwritten input 300 of the Figure 3A, including the text bounding box TBB and a calculated interline CIL. The calculated interline CIL may be a normalized value, e.g., a pre-defined value or calculated as a function of the calculated font size. The text block 400 of FIG. 4A is converted into typeset following the typesetting input mode selection action according to a preselected font type, a calculated font size and a calculated interline distance.

As an example, Figure 4A shows the typeset version 400 displayed in Courrier New font type. The font size is calculated according to the text block base height and a font size ratio. The font size ratio calculated from the font module 10 is 1,45 for the font type. The font size ratio is calculated based on information of the 'x' character for the font type and for a font size of 10 pt (as further explained below). The font ratio is obtained by dividing the x-character height by the font size. The text block font size, as a function of the text block base height, is (7,9mm x 1,45) which is 11,45mm.

The text block font size may be converted into typographic and digital imaging units such as a point (pt). The point is the usual unit for measuring font size and distance between lines of text. A desktop publishing point also called a PostScript point is defined as 0,3527 millimeters. Figure 4A shows typeset version of the text block displayed in Courrier New font type set according to the calculated font size of 11.45mm or 32,46 pt.

Figure 4B shows the handwritten input 300 of the Figure 3A together with a typeset input 410 inserted following the typesetting input mode selection action comprising a selection of a cursor within the text block according to a particular example. The typeset input is a sequence of typeset characters 410 representing a word "made" and displayed according to the preselected font type, for example Arial font type, and the calculated font size as described above.

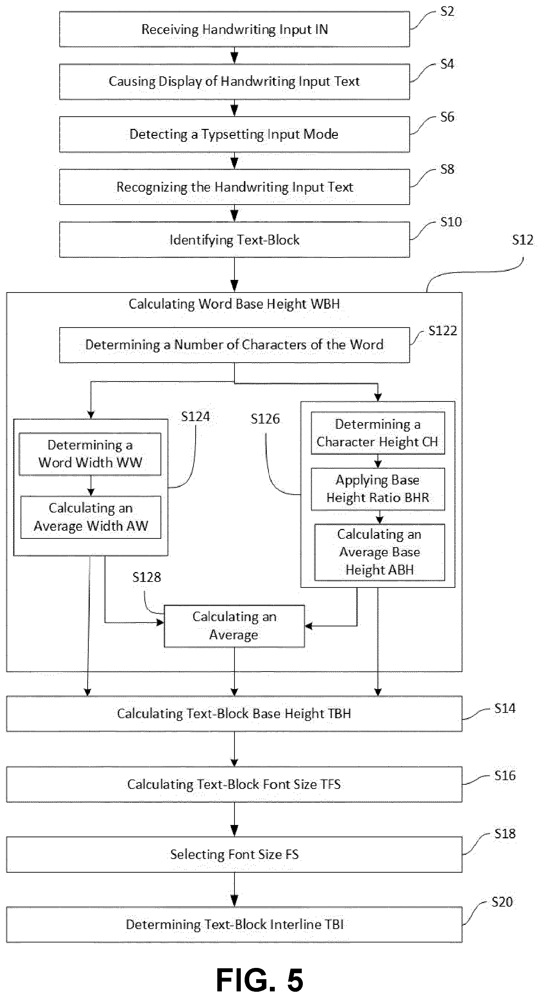

A method implemented by the computing device DV (as described earlier with reference notably to FIG. 1-4) for font size setting is now described with reference to FIG. 5, in accordance with a particular embodiment of the present invention. More specifically, a font size of typeset characters may be set, said font size matching a size of handwritten characters input on an unconstrained canvas of the computing device. The computing device DV implements this method by executing the application 12 stored in the memory 7.

In a receiving step S2, the computing device DV receives handwriting input on the unconstrained canvas of the input area 4.

In a displaying step S4, the computing device DV causes display of the handwriting input on a display area. The handwriting input may be input text rendered as digital ink, for instance as shown in FIG. 3A.

In a detecting step S6, the computing device DV detects a typesetting input mode action entered via the input area 4 by a user. The typesetting input mode action may be detected upon interaction with user interface components such as a menu selection or a cursor selection.

A cursor may be displayed by the application 12, and editing functions performed, in response to user interaction with the digital ink within the rendering or editing area (display area).

This interaction may be through known gestures on touch and hover devices (such as tap, double tap,, press, long press, swipe, pinch), specific digital ink editing gestures (such as those described in European Patent Application No. 15 290 296.1 and US Patent Application No. 14/989,217 both titled "System and Method for Note Taking with Gestures" and both filed in the name of the present Applicant and Assignee), or hardware tools (such as keyboard, mouse).

Alternatively, or additionally, the cursor may be displayed by the application 12 in a (set) default position, such as at the end of the (most recent) digital ink. The cursor remains displayed, for example, until new handwriting input is detected by the application 12.

The application 12 may provide the cursor management through segmentation in the recognition process (such as those described in European Patent Application No. 15 290 303.5 and US Patent Application No. 14/978,081 both titled "System and Method for beautifying ink" and both filed in the name of the present Applicant and Assignee).

In another embodiment, the typesetting input mode comprises the detection of a user interaction for converting the handwriting input text into typeset ink. That is, after the handwritten text has been inputted, typesetting of the input content is caused by the user performing a gesture with respect to the input interface 4 of the device DV to select a menu element or button or to input a handwritten typesetting command, for example.

In a recognizing step S8, in response to the typeset input mode action detection, the computing device DV recognizes the handwriting input text as characters or words contained in text blocks as described earlier. In particular, multiple words defining at least one text block may be recognized, wherein each word comprises at least one character. Such recognition and interpretation of the handwritten text provides the ability to directly interact with the digital ink to edit the digital ink text and, further convert as typeset ink the recognized input text so as provide a typeset or document version of the canvas, and other text and non-text containing content, having styling which captures and respects the user's intent.

In an identifying step S10, the handwritten input text 300 is recognized as the combination of characters and words. Further, as the recognized text is provided on adjacent virtual horizontal lines, the handwriting input text is identified as a text block containing the words 310, 320, 330, 340 and 350.

In a word base height calculating step S12, the application calculates (or determines) a word base height for each word of the identified text block. A word base height can be represented by different features of a handwritten word including an average base width of the word AW, an average base height of the word ABH or an average of the average base width and the average base height of the word. The different features are calculated according to different methods including the following stages.

The calculating step S12 may comprise steps (or stages) S122-S128 as further described below.

In a first determining stage S122 of calculating a word base height, the base height calculation module determines a number of characters of (or comprised within) a recognized word. In the present example, the determination S122 is performed according to the segmentation information retrieved by the segmentation expert as described above. The segmentation expert determines the ranges of each recognized element within the handwritten input, such as the words and the characters of handwritten text. For example, FIG. 3G shows determined ranges, illustrated as character bounding boxes 344 and 346 for an example segmentation of the characters of the fourth word 340.

If the number of characters of the recognized word is above a threshold or the highest number of the range, the base height calculation module determines a first feature of the recognized word according to a first stage S124. This first feature is an average base width of the recognized word per character. In other words, it is the average of the base width of each character of the recognized word. More specifically, the base height calculation module 18 may determine a width of a bounding box of the recognized word WW according to the segmentation information as described above. Then, the base height calculation module 18 calculates the first feature as an average base width of the bounding box by dividing the width of the bounding box by the number of characters of the recognized words. The calculated first feature represents the word base height of the recognized word, wherein the number of characters of the recognized word is over (above) the threshold or the highest number of the range, for further usage by the current method.

If the number of characters of the recognized word is below the threshold or the lowest number of the range, the base height calculation module 18 determines a second feature of the recognized word according to a second stage S126. This second feature is an average, named average base height, of the base height of each character of the recognized word. In other words, it is the average base height of the recognized word per character. The base height of each character is a function of a character height of said character. More specifically, the base height calculation module 18 may determine character heights CH of the bounding boxes of the characters of the recognized word WW according to the segmentation information as described above. Then, the base height calculation module applies base height ratios to the character heights of the recognized word to calculate character base heights, wherein the base height ratios are retrieved from a base height ratio database 9, further described above. Then, the base height calculation module calculates the second feature as an average base height of the recognized word ABH based on the character base heights of the characters of the recognized word. The calculated second feature represents the word base height of the recognized word, wherein the number of characters of the recognized word is below the threshold or the lowest number of the range, for further usage by the current method.

If the number of characters of the recognized word is equal to the threshold or within the range, the base height calculation module 18 determines the first and second features of the recognized word according to the first stage S124 and the second stage S126, as described thereover. Then the base height calculation module 18 determines a third feature of the recognized word according to a third stage S128. The base height calculation module 18 calculates the third feature as an average of the first and the second feature. The calculated third feature represents the word base height of the recognized word, wherein the number of characters of the recognized word is equal to the threshold or within the range, for further usage by the current method.

In a text block base height calculating step S14, the computing device calculates (or determines) a text block base height based on the average of the word base heights of each recognized word of the text block calculated at step S12.

In a text block font size calculating step S16, the computing device calculates (or sets) a text block font size based on the text block base height calculated at step S14. The text block font size may be calculated (or set) based on the text block base height calculated at step S14 and a font size ratio calculated using font information from the font module 10 of the operating system 8.

Font type elements, such as characters or symbols, may be described based on dimensional information of the corresponding digital ink text elements. The dimensional information may include typographical information such as font size ratio, also referred to as aspect ratio, expressing the ratio between the font size and the character base height of the digital ink text elements of a font type. Every font type has a font size ratio, for example, the font size ratio for Arial font is 1,45. Font size ratios are calculated based on font information from the font module 10 of the operating system 8.

In a font size selecting step S18, the computer device may select (or set) a font size based on the calculated text block font size, i.e. the text block font size determined in S16. The selection of the font size may be made by comparing the font size determined in S16 (equal to the average of the respective word base heights of the words of the text block) to a set of predefined font sizes of the unconstrained canvas; and selecting a predefined font size, from the set of predefined font sizes, which is the closest to the calculated font size. The selected font size may then be set as the font size of the text block.

The predefined font sizes may be defined as a factor of the default font size.

In a text block interline determining step S20, the computer device may determine a text block interline factor TLH.

In one embodiment, the text block interline factor is set as a default interline factor, for example when the text block contains only one text line. In another embodiment, the text block interline determination module 22 determines the text block interline factor according to an average interline distance of the text block. Line heights of the text block are measured between the base lines of two adjacent handwritten text lines. The text block line height determination module computes the average line height according to the measured line heights. A factor is calculated by dividing the average line height by the calculated font size. The text block line height factor is chosen as the closest possible line height factor to the calculated factor. The text block line height TLH is calculated as the product of the calculated font size and the text block line height factor.

## Claims

1. A method implemented by a computing device (DV) for font size setting, said method comprising:
a. Receiving (S2), on an unconstrained canvas of an input area (4), handwriting input text (300);
b. causing display (S4) of, on a display area (5), the handwriting input text;
c. detecting (S6), on the input area, a typesetting input mode action;
d. recognizing (S8), in response to the typesetting input mode action detection, the handwriting input text as multiple words (310, 320, 330, 340, 350) defining at least one text block (302), each word comprising at least one character;
e. defining a threshold or a range of numbers of characters;
f. calculating (S12) a word base height (WBH) for each recognized word of a text block, wherein the word base height is calculated as:
i. an average, referred as average base width (AW), of a base width of each character of the recognized word if a number of characters of the recognized word is above the threshold or the highest number of the range;
ii. an average, referred as average base height (ABH), of a base height of each character of the recognized word if the number of characters of the recognized word is below the threshold or the lowest number of the range, wherein the base height of each character (CH) is a function of a character height of said character;
iii. an average of the average base width and the average base height of the recognized word if the number of characters of the recognized word is equal to the threshold or within the range; and
g. setting a font size (FS, TFS), of the text block, based on an average of the respective word base heights of the words of the text block (302).

2. The method of claim 1, wherein the detecting of the typesetting input mode action comprises selecting a cursor input mode;
wherein the method further comprises causing display, according to the set font size, of new typeset characters (410) within the text block at a detected cursor position.

3. The method of claim 1, wherein the detecting of the typesetting input mode action comprises detecting a user interaction for converting the handwriting input into typeset; wherein the method further comprises converting the handwriting input text into typeset characters (400); and displaying the handwriting input text as said typeset characters (400) according to the set font size within the text block.

4. The method of any one of claims 1 to 3, wherein the calculating of the word base height of each recognized word comprises:
a. determining the number of characters comprised within said recognized word;
b. if the number of characters of said recognized word is above the threshold or the highest number of the range, determining a width (WW) of a bounding box of the recognized word; wherein the word base height of the recognized word is calculated by dividing the width of said bounding box by the number of characters of the recognized word;
c. if the number of characters of the recognized word is below the threshold or the lowest number of the range, determining a height (HH) of a bounding box of each character of the recognized word, wherein the word base height is calculated as an average base height per character of the recognized word, wherein a base height of a character is a function of a character height (CH) of said character;
d. if the number of characters of the recognized word is equal to the threshold or within the range, the calculating of the word base height of each recognized word further comprises:
i. determining the base width of the bounding box of the recognized word by dividing the width of the bounding box of the recognized word by the number of characters of the recognized word ; and
ii. determining the average base height per character of the recognized word;
wherein the word base height is calculated as an average of the average base width of the bounding box and the average base height.

5. The method of claim 4, wherein the calculating of the word base height of each recognized word further comprises:
if the number of characters of the recognized word is above the threshold or above the highest number of the range, determining a width of a bounding box of each character of the recognized word (314, 316, 318, 344, 346), wherein the word base height is calculated as an average of the widths of the bounding boxes of each character of the recognized word.

6. The method of claim 4 or 5, wherein the threshold is two characters.

7. The method of any one of claims 1 to 6, wherein the setting of the font size further comprises:
a. calculating a font size (TFS) equal to the average of the respective word base heights of the words of the text block;
b. comparing the calculated font size to a set of predefined font sizes of the unconstrained canvas; and
c. selecting, as the set font size, a predefined font size (FS) which is the closest to the calculated font size.

8. The method of claim 7, further comprising setting a text block interline factor by:
a. calculating an average interline (CIL) equal to an average interline distances (ILD) of the text block;
b. calculating a factor by dividing the calculated average interline by the calculated font size;
c. selecting, as the set text block interline factor, a predefined interline factor which is the closest to the calculated factor.

9. Computing device (DV) for font size setting, comprising:
a. an input area (4) configured to receive a handwriting input text on an unconstrained canvas;
b. a display area (5) configured to cause display of the handwriting input text;
c. a typeset detection module (14) configured to detect a typesetting input mode action on the input area;
d. a recognition module (16) configured to recognize, in response to the typesetting input mode action detection, the handwriting input text as multiple words defining at least one text block, each word comprising at least one character;
e. a base height calculation module (18) configured to select a threshold or a range of numbers of characters and to calculate a word base height for each recognized word of a text block, wherein the word base height is calculated as:
i. an average, referred as average base width, of a base width of each character of the recognized word if a number of characters of the recognized word is above the threshold or the highest number of the range;
ii. an average, referred as average base height, of a base height of each character of the recognized word if the number of characters of the recognized word is below the threshold or the lowest number of the range, wherein the base height of a character is a function of a character height of said character;
iii. an average of the average base width and the average base height of the recognized word if the number of characters of the recognized word is equal to the threshold or within the range;
f. a font size setting module (20) configured to set a font size of the text block, wherein the font size is an average of the word base heights of the words of the text block.

10. The computing device of claim 9, comprising an interline determination module (22) configured to determine a text block interline factor (TBI) according to an average interline (ILD) of the text block .

11. The computing device of claim 9 or 10, comprising a typeset input module configured to cause display of new typeset characters within the text block at a detected cursor position according to the calculated font size.

12. The computing device of any one of claims 9 to 11, comprising a converter configured to convert the handwriting input into typeset and to cause display on the display area, according to the set font size, of the input text as typeset characters within the text block.

13. The computing device of any one of claims 9 to 12, wherein a base height of a character is a function of a character height of the character according to a base height ratio retrieved from a base height ratio database (9).

14. The computing device of any one of claims 9 to 12, the font size calculation module is configured to set the font size as a function of a font size ratio, said font size ratio being determined based on font information (10) of the operating system (8).

## Patentansprüche

1. Von einem Rechner (DV) ausgeführtes Verfahren zur Einstellung der Schriftgröße, wobei das Verfahren Folgendes umfasst:
a. Empfangen (S2) von handschriftlichem Eingabetext (300) auf einer frei gestaltbaren Fläche eines Eingabebereichs (4);
b. Veranlassen des Anzeigens (S4) des handschriftlichen Eingabetexts auf einem Anzeigebereich (5);
c. Detektieren (S6), im Eingabebereich, einer Eingabemodusaktion zur Schriftsatz;
d. Erkennen (S8), als Reaktion auf die Detektion einer Eingabemodusaktion zur Schriftsatz, des handschriftlichen Eingabetexts als mehrere Wörter (310, 320, 330, 340, 350), die mindestens einen Textblock (302) bilden, wobei jedes Wort mindestens ein Zeichen umfasst;
e. Festlegen eines Schwellenwerts oder eines Bereichs für die Anzahl der Zeichen;
f. Berechnen (S12) einer Wortbasishöhe (WBH) für jedes erkannte Wort eines Textblocks, wobei die Wortbasishöhe berechnet wird als:
i. ein Mittelwert, der als durchschnittliche Basisbreite (AW) bezeichnet wird, einer Basisbreite jedes Zeichens des erkannten Wortes, wenn eine Anzahl von Zeichen des erkannten Wortes über dem Schwellenwert oder der höchsten Zahl des Bereichs liegt;
ii. ein Mittelwert, der als durchschnittliche Basishöhe (ABH) bezeichnet wird, einer Basishöhe jedes Zeichens des erkannten Wortes, wenn die Anzahl der Zeichen des erkannten Wortes unter dem Schwellenwert oder der niedrigsten Zahl des Bereichs liegt, wobei die Basishöhe jedes Zeichens (CH) eine Funktion einer Zeichenhöhe des Zeichens ist;
iii. ein Mittelwert der durchschnittlichen Basisbreite und der durchschnittlichen Basishöhe des erkannten Wortes, wenn die Anzahl der Zeichen des erkannten Wortes gleich dem Schwellenwert oder innerhalb des Bereichs ist; und
g. Einstellen einer Schriftgröße (FS, TFS) des Textblocks, basierend auf einem Durchschnitt der jeweiligen Wortbasishöhen der Wörter des Textblocks (302).

2. Verfahren nach Anspruch 1, wobei das Detektieren der Eingabemodusaktion zur Schriftsatz das Auswählen eines Cursor-Eingabemodus umfasst;
wobei das Verfahren ferner das Veranlassen der Anzeige, entsprechend der eingestellten Schriftgröße, neuer gesetzter Zeichen (410) innerhalb des Textblocks an einer detektierten Cursorposition umfasst.

3. Verfahren nach Anspruch 1, wobei das Detektieren der Eingabemodusaktion zur Schriftsatz das Detektieren einer Benutzerinteraktion zum Umwandeln der handschriftlichen Eingabe in Schriftsatz umfasst; wobei das Verfahren ferner das Umwandeln des handschriftlichen Eingabetexts in gesetzte Zeichen (400); und das Anzeigen des handschriftlichen Eingabetexts als die gesetzten Zeichen (400) entsprechend der eingestellten Schriftgröße innerhalb des Textblocks umfasst.

4. Verfahren nach einem der Ansprüche 1 bis 3, wobei die Berechnung der Wortbasishöhe jedes erkannten Wortes Folgendes umfasst:
a. Bestimmen der Anzahl der Zeichen, die in dem erkannten Wort umfasst sind;
b. wenn die Anzahl der Zeichen des erkannten Wortes über dem Schwellenwert oder der höchsten Zahl des Bereichs liegt, Bestimmen einer Breite (WW) eines Begrenzungsfelds des erkannten Wortes; wobei die Wortbasishöhe des erkannten Wortes berechnet wird, indem die Breite des Begrenzungsfelds durch die Anzahl der Zeichen des erkannten Wortes geteilt wird;
c. wenn die Anzahl der Zeichen des erkannten Wortes unter dem Schwellenwert oder der niedrigsten Zahl des Bereichs liegt, Bestimmen einer Höhe (HH) eines Begrenzungsfelds jedes Zeichens des erkannten Wortes, wobei die Wortbasishöhe als eine durchschnittliche Basishöhe pro Zeichen des erkannten Wortes berechnet wird, wobei eine Basishöhe eines Zeichens eine Funktion einer Zeichenhöhe (CH) des genannten Zeichens ist;
d. wenn die Anzahl der Zeichen des erkannten Wortes gleich dem Schwellenwert oder innerhalb des Bereichs ist, umfasst die Berechnung der Wortbasishöhe jedes erkannten Wortes ferner:
i. Bestimmen der Basisbreite des Begrenzungsfelds des erkannten Wortes durch Teilen der Breite des Begrenzungsfelds des erkannten Wortes durch die Anzahl der Zeichen des erkannten Wortes; und
ii. Bestimmen der durchschnittlichen Basishöhe pro Zeichen des erkannten Wortes;
wobei die Wortbasishöhe als Mittelwert der durchschnittlichen Basisbreite des Begrenzungsfelds und der durchschnittlichen Basishöhe berechnet wird.

5. Verfahren nach Anspruch 4, wobei die Berechnung der Wortbasishöhe jedes erkannten Wortes ferner Folgendes umfasst:
wenn die Anzahl der Zeichen des erkannten Wortes über dem Schwellenwert oder über der höchsten Zahl des Bereichs liegt, Bestimmen einer Breite eines Begrenzungsfelds jedes Zeichens des erkannten Wortes (314, 316, 318, 344, 346), wobei die Wortbasishöhe als Mittelwert der Breiten der Begrenzungsfelder jedes Zeichens des erkannten Wortes berechnet wird.

6. Verfahren nach Anspruch 4 oder 5, wobei der Schwellenwert zwei Zeichen beträgt.

7. Verfahren nach einem der Ansprüche 1 bis 6, wobei das Einstellen der Schriftgröße ferner Folgendes umfasst:
a. Berechnen einer Schriftgröße (TFS), die dem Mittelwert der jeweiligen Wortbasishöhen der Wörter des Textblocks entspricht;
b. Vergleichen der berechneten Schriftgröße mit einem Satz vordefinierter Schriftgrößen der frei gestaltbaren Fläche; und
c. Auswählen einer vordefinierten Schriftgröße (FS) als eingestellte Schriftgröße, die der berechneten Schriftgröße am nächsten kommt.

8. Verfahren nach Anspruch 7, ferner umfassend das Einstellen eines Textblock-Zeilenabstandsfaktors durch:
a. Berechnen eines durchschnittlichen Zeilenabstands (CIL) gleich einem durchschnittlichen Zeilenabstand (ILD) des Textblocks;
b. Berechnen eines Faktors durch Teilen des berechneten durchschnittlichen Zeilenabstands durch die berechnete Schriftgröße;
c. Auswahl eines vordefinierten Zeilenabstandsfaktors, der dem berechneten Faktor am nächsten kommt, als eingestellter Textblockabstandsfaktor.

9. Rechenvorrichtung (DV) zum Einstellen der Schriftgröße, umfassend:
a. einen Eingabebereich (4), der so eingerichtet ist, dass er einen handschriftlichen Eingabetext auf einer frei gestaltbaren Fläche empfängt;
b. einen Anzeigebereich (5), der so eingerichtet ist, dass er die Anzeige des handschriftlichen Eingabetexts bewirkt;
c. ein Schriftsatzdetektionsmodul (14), das so eingerichtet ist, dass es eine Eingabemodusaktion für Schriftsatz auf dem Eingabebereich detektiert;
d. ein Erkennungsmodul (16), das so eingerichtet ist, als Reaktion auf die Detektion der Eingabemodusaktion für Schriftsatz, den handschriftlichen Eingabetext als mehrere Wörter zu erkennen, die mindestens einen Textblock definieren, wobei jedes Wort mindestens ein Zeichen umfasst;
e. ein Basishöhenberechnungsmodul (18), das so eingerichtet ist, dass es einen Schwellenwert oder einen Bereich von Zeichenzahlen auswählt und eine Wortbasishöhe für jedes erkannte Wort eines Textblocks berechnet, wobei die Wortbasishöhe berechnet wird als:
i. einen Mittelwert, bezeichnet als durchschnittliche Grundbreite, der Grundbreite jedes Zeichens des erkannten Wortes, wenn eine Anzahl von Zeichen des erkannten Wortes über dem Schwellenwert oder der höchsten Zahl des Bereichs liegt;
ii. einen Mittelwert, bezeichnet als durchschnittliche Grundhöhe, einer Grundhöhe jedes Zeichens des erkannten Wortes, wenn die Anzahl der Zeichen des erkannten Wortes unter dem Schwellenwert oder der niedrigsten Zahl des Bereichs liegt, wobei die Grundhöhe eines Zeichens eine Funktion der Zeichenhöhe des Zeichens ist;
iii. einen Mittelwert der durchschnittlichen Basisbreite und der durchschnittlichen Basishöhe des erkannten Wortes, wenn die Anzahl der Zeichen des erkannten Wortes gleich dem Schwellenwert oder innerhalb des Bereichs ist;
f. ein Schriftgrößeneinstellungsmodul (20), das zum Einstellen einer Schriftgröße des Textblocks eingerichtet ist, wobei die Schriftgröße ein Mittelwert der Wortbasishöhen der Wörter des Textblocks ist.

10. Rechenvorrichtung nach Anspruch 9, umfassend ein Zeilenabstandsbestimmungsmodul (22), das so eingerichtet ist, dass es einen Textblockzeilenabstandsfaktor (TBI) gemäß einem mittleren Zeilenabstand (ILD) des Textblocks bestimmt.

11. Rechenvorrichtung nach Anspruch 9 oder 10, umfassend ein Schriftsatzeingabemodul, das so eingerichtet ist, dass es die Anzeige neuer gesetzter Zeichen innerhalb des Textblocks an einer detektierten Cursorposition entsprechend der berechneten Schriftgröße bewirkt.

12. Rechenvorrichtung nach einem der Ansprüche 9 bis 11, umfassend einen Konverter, der dazu eingerichtet ist, die Handschrifteingabe in Schriftsatz umzuwandeln und entsprechend der eingestellten Schriftgröße die Anzeige des Eingabetextes als gesetzte Zeichen innerhalb des Textblocks auf dem Anzeigebereich zu bewirken.

13. Rechenvorrichtung nach einem der Ansprüche 9 bis 12, wobei eine Basishöhe eines Zeichens eine Funktion einer Zeichenhöhe des Zeichens gemäß einem aus einer Basishöhenverhältnis-Datenbank (9) abgerufenen Basishöhenverhältnis ist.

14. Rechenvorrichtung nach einem der Ansprüche 9 bis 12, wobei das Schriftgrößenberechnungsmodul so eingerichtet ist, dass es die Schriftgröße als Funktion eines Schriftgrößenverhältnisses einstellt, wobei das Schriftgrößenverhältnis auf der Grundlage von Schriftinformationen (10) des Betriebssystems (8) bestimmt wird.

## Revendications

1. Procédé mis en œuvre par un dispositif informatique (DV) pour le réglage de la taille de police, ledit procédé comprenant :
a. la réception (S2), sur un canevas non contraint d'une zone de saisie (4), d'un texte saisi à la main (300) ;
b. l'affichage (S4), sur une zone d'affichage (5), du texte saisi à la main ;
c. la détection (S6), sur la zone de saisie, d'une action de mode de saisie de composition typographique ;
d. la reconnaissance (S8), en réponse à la détection de l'action de mode de saisie de composition typographique, du texte saisi à la main en tant que plusieurs mots (310, 320, 330, 340, 350) définissant au moins un bloc de texte (302), chaque mot comprenant au moins un caractère ;
e. définir un seuil ou une plage de nombres de caractères ;
f. calculer (S12) une hauteur de base du mot (WBH) pour chaque mot reconnu d'un bloc de texte, la hauteur de base du mot étant calculée comme suit :
i. une moyenne, appelée largeur de base moyenne (AW), de la largeur de base de chaque caractère du mot reconnu si le nombre de caractères du mot reconnu est supérieur au seuil ou au nombre le plus élevé de la plage ;
ii. une moyenne, appelée « hauteur de base moyenne » (ABH), de la hauteur de base de chaque caractère du mot reconnu si le nombre de caractères de ce mot est inférieur au seuil ou au nombre minimal de la plage, la hauteur de base de chaque caractère (CH) étant fonction de la hauteur dudit caractère ;
iii. une moyenne de la largeur de base moyenne et de la hauteur de base moyenne du mot reconnu si le nombre de caractères du mot reconnu est égal au seuil ou se situe dans la plage ; et
g. définir une taille de police (FS, TFS) du bloc de texte, sur la base d'une moyenne des hauteurs de base respectives des mots du bloc de texte (302).

2. Procédé selon la revendication 1, dans lequel la détection de l'action de mode de saisie de composition typographique comprend la sélection d'un mode de saisie par curseur ;
dans lequel le procédé comprend en outre le fait de provoquer l'affichage, conformément à la taille de police définie, de nouveaux caractères composés (410) au sein du bloc de texte à une position de curseur détectée.

3. Procédé selon la revendication 1, dans lequel la détection de l'action relative au mode de saisie de composition typographique comprend la détection d'une interaction de l'utilisateur visant à convertir la saisie manuscrite en caractères typographiques ; dans lequel le procédé comprend en outre la conversion du texte saisi à la main en caractères typographiques (400) ; et l'affichage du texte saisi à la main sous la forme desdits caractères typographiques (400) selon la taille de police définie au sein du bloc de texte.

4. Procédé selon l'une quelconque des revendications 1 à 3, dans lequel le calcul de la hauteur de base de chaque mot reconnu comprend :
a. déterminer le nombre de caractères composant ledit mot reconnu ;
b. si le nombre de caractères dudit mot reconnu est supérieur au seuil ou au nombre le plus élevé de la plage, déterminer une largeur (WW) d'un cadre de délimitation du mot reconnu ; la hauteur de base du mot reconnu étant calculée en divisant la largeur dudit cadre de délimitation par le nombre de caractères du mot reconnu ;
c. si le nombre de caractères du mot reconnu est inférieur au seuil ou au nombre le plus bas de la plage, déterminer une hauteur (HH) d'un rectangle englobant chaque caractère du mot reconnu, la hauteur de base du mot étant calculée comme la hauteur de base moyenne par caractère du mot reconnu, la hauteur de base d'un caractère étant fonction de la hauteur (CH) dudit caractère ;
d. si le nombre de caractères du mot reconnu est égal au seuil ou se situe dans la plage, le calcul de la hauteur de base de chaque mot reconnu comprend en outre :
i. la détermination de la largeur de base du rectangle englobant le mot reconnu en divisant la largeur du rectangle englobant le mot reconnu par le nombre de caractères du mot reconnu ; et
ii. la détermination de la hauteur de base moyenne par caractère du mot reconnu ;
la hauteur de base du mot étant calculée comme la moyenne de la largeur de base moyenne du cadre de délimitation et de la hauteur de base moyenne.

5. Procédé selon la revendication 4, dans lequel le calcul de la hauteur de base de chaque mot reconnu comprend en outre :
si le nombre de caractères du mot reconnu est supérieur au seuil ou supérieur au nombre maximal de la plage, déterminer la largeur d'un rectangle englobant chaque caractère du mot reconnu (314, 316, 318, 344, 346), la hauteur de base du mot étant calculée comme la moyenne des largeurs des rectangles englobants de chaque caractère du mot reconnu.

6. Procédé selon la revendication 4 ou 5, dans lequel le seuil est de deux caractères.

7. Procédé selon l'une quelconque des revendications 1 à 6, dans lequel le réglage de la taille de police comprend en outre :
a. le calcul d'une taille de police (TFS) égale à la moyenne des hauteurs de base respectives des mots du bloc de texte ;
b. la comparaison de la taille de police calculée à un ensemble de tailles de police prédéfinies du canevas non contraint ; et
c. sélectionner, comme taille de police définie, une taille de police prédéfinie (FS) qui est la plus proche de la taille de police calculée.

8. Procédé selon la revendication 7, comprenant en outre la définition d'un facteur d'interligne du bloc de texte par :
a. le calcul d'un interligne moyen (CIL) égal à la moyenne des distances d'interligne (ILD) du bloc de texte ;
b. le calcul d'un facteur en divisant l'interligne moyen calculé par la taille de police calculée ;
c. sélectionner, comme facteur d'interligne défini pour le bloc de texte, un facteur d'interligne prédéfini qui est le plus proche du facteur calculé.

9. Dispositif informatique (DV) pour le réglage de la taille de police, comprenant :
a. une zone de saisie (4) configurée pour recevoir un texte saisi à la main sur canevas non contraint ;
b. une zone d'affichage (5) configurée pour provoquer l'affichage du texte saisi à la main ;
c. un module de détection de composition typographique (14) configuré pour détecter une action de mode de saisie de composition typographique dans la zone de saisie ;
d. un module de reconnaissance (16) configuré pour reconnaître, en réponse à la détection de l'action du mode de saisie de composition typographique, le texte saisi à la main sous la forme de plusieurs mots définissant au moins un bloc de texte, chaque mot comprenant au moins un caractère ;
e. un module de calcul de hauteur de base (18) configuré pour sélectionner un seuil ou une plage de nombres de caractères et pour calculer une hauteur de base de mot pour chaque mot reconnu d'un bloc de texte, la hauteur de base de mot étant calculée comme suit :
i. une moyenne, appelée « largeur de base moyenne », de la largeur de base de chaque caractère du mot reconnu si le nombre de caractères du mot reconnu est supérieur au seuil ou au nombre le plus élevé de la plage ;
ii. une moyenne, appelée « hauteur de base moyenne », de la hauteur de base de chaque caractère du mot reconnu si le nombre de caractères du mot reconnu est inférieur au seuil ou au nombre le plus bas de la plage, la hauteur de base d'un caractère étant fonction de la hauteur dudit caractère ;
iii. une moyenne de la largeur de base moyenne et de la hauteur de base moyenne du mot reconnu si le nombre de caractères du mot reconnu est égal au seuil ou se situe dans la plage ;
f. un module de réglage de la taille de police (20) configuré pour régler la taille de police du bloc de texte, la taille de police étant une moyenne des hauteurs de base des mots du bloc de texte.

10. Le dispositif informatique selon la revendication 9, comprenant un module de détermination de l'interligne (22) configuré pour déterminer un facteur d'interligne de bloc de texte (TBI) en fonction d'un interligne moyen (ILD) du bloc de texte.

11. Dispositif informatique selon la revendication 9 ou 10, comprenant un module de saisie typographique configuré pour provoquer l'affichage de nouveaux caractères typographiques au sein du bloc de texte, à une position de curseur détectée, en fonction de la taille de police calculée.

12. Dispositif informatique selon l'une quelconque des revendications 9 à 11, comprenant un convertisseur configuré pour convertir la saisie manuscrite en caractères typographiques et pour provoquer l'affichage, sur la zone d'affichage, en fonction de la taille de police définie, du texte saisi sous forme de caractères typographiques au sein du bloc de texte.

13. Dispositif informatique selon l'une quelconque des revendications 9 à 12, dans lequel la hauteur de base d'un caractère est fonction de la hauteur du caractère, selon un rapport de hauteur de base extrait d'une base de données de rapports de hauteur de base (9).

14. Dispositif informatique selon l'une quelconque des revendications 9 à 12, dans lequel le module de calcul de la taille de police est configuré pour définir la taille de police en fonction d'un rapport de taille de police, ledit rapport de taille de police étant déterminé sur la base d'informations de police (10) du système d'exploitation (8).
